# EUROPEAN PATENT SPECIFICATION

(11) **EP 1 456 294 B1**
(45) Date of publication and mention of the grant of the patent: **18.05.2011**
(21) Application number: 02792963.7
(22) Date of filing: 11.12.2002
(51) Int. Cl.: C08L 23/10, C08F 297/08

(54) **IMPACT-RESISTANT POLYOLEFIN COMPOSITIONS**
SCHLAGFESTE POLYOLEFINMISCHUNG
COMPOSITIONS DE POLYOLEFINES RESISTANTES AUX CHOCS

(30) Priority: 19.12.2001 EP 01130179
(43) Date of publication of application: 15.09.2004
(73) Proprietor: Basell Poliolefine Italia S.r.l., 20124 Milano (IT)
(72) Inventor: PELLICONI, Anteo, I-45030 S.M. Maddalena (IT); CAGNANI, Camillo, I-47013 Dovadola (IT)
(74) Representative: Gaverini, Gaetano Luigi Attilio
(86) International application number: PCT/EP2002/014068
(87) International publication number: WO 2003/051984

(56) References cited:
- EP-A- 0 353 981
- EP-A- 0 792 814
- EP-A- 0 844 279
- EP-A- 0 844 280
- US-A- 4 316 966

## Description

The present invention concerns polyolefin compositions comprising a crystalline propylene polymer component selected from propylene honnopolymers and propylene-ethylene and/or other α-olefin random copolymers, a copolymer of propylene with up to 40% by weight of ethylene and a copolymer of ethylene with C₄-C₁₀ α-olefins.

The compositions of the present invention present a unique balance of processability, mechanical properties and optical properties. In addition they present low/very low blush, reduced blooming and low content of fraction extractable in organic solvents.

The said compositions can be easily processed by injection-molding and can be used for several applications, including housewares and toys, and in particular for food-contact applications.

Compositions comprising polypropylene and a rubbery phase formed by an elastomeric copolymer of ethylene with α-olefins are already known in the art, and described in particular in European patents 170 255 and 373 660, and in WO 01/19915. Said compositions present impact resistance and, in the case of European patent 373 660 and WO 01/19915, transparency values interesting for many applications, however the overall balance of properties is still not totally satisfactory in the whole range of possible applications, in view of the high stardards required by the market. Therefore there is a continuous demand for compositions of this kind with improved properties.

Other examples of compositions containing polypropylene and various olefin copolymers are disclosed in EP0353981, EP0792914 and EP0844280.

Such compositions are particularly suited for preparing films having good mechanical and heat sealing properties (EP0353981 and Rep0844280) or highly flexible articles (EP0792914).

Polymerization processes for the preparation of similar compositions are disclosed in EP0844279 and US4316966.

A new and valuable balance of properties has now been achieved by the polyolefin compositions of the present invention, comprising (percent by weight):
1) 55%-90%, preferably 62%-85%, of a crystalline propylene homopolymer or copolymer containing up to 15%, preferably up to 10%, of ethylene and/or C₄-C₁₀ α-olefin(s);
2) 10%-45%, preferably 15%-40%, of a blend of a copolymer of propylene with more than 15% up to 40% of ethylene, preferably from 18% to 35% of ethylene (copolymer (a)), and a copolymer of ethylene with one or more C₄-C₁₀ α-olefin(s) containing from 10% to 40%, preferably from 10% to 35%, of said C₄-C₁₀ α-olefin(s) (copolymer (b)), wherein the weight ratio (a)/(b) is from 1/4 to 4/1, preferably from 112.5 to 2.5/1, more preferably from 1/2 to 2/1; and the Intrinsic Viscosity [η] of the fraction (of the overall composition) soluble in xylene at room temperature: is 0.8 to to 1.5 dl/g (to achieve high trasparency)

From the above definitions it is evident that the term "copolymer" includes polymers containing more than one kind of comonomers,

As previously said, the compositions of the present invention can be easily converted into various kinds of finished or semi-finished articles, in particular by using injection-molding techniques, as they possess relatively high values of MFR, associated with the said high balance of properties (in particular, of flexural modulus, impact resistance, ductile/brittle transition temperature and haze). The compositions of the present invention having values of MFR (230 °C, 2.16 Kg) of the overall composition equal to or higher than 4 g/10 min., in particular equal to or higher than 5 g/10 min., are preferred.

Other preferred features for the compositions of the present invention are:
- content of polymer insoluble in xylene at room temperature (23 °C) (substantially equivalent to the Isotacticity Index) for component 1): not less than 90%, in particular not less than 93% for propylene copolymers and not less than 96% for propylene homopolymers, said percentages being by weight and referred to the weight of component 1);

The compositions of the present invention preferably present at least one melt peak, determined by way of DSC (Differential Scanning Calorimetry), at a temperature higher than 145-150°C.

Moreover, the compositions of the present invention preferably have:
- a total content of ethylene from 10% to 30% by weight;
- a total content of C₄-C₁₀ α-olefin(s) of 8% by weight or less, more preferably of 5% by weight or less;
- a Flexural Modulus from 600 to 1300 MPa;
- Izod values at 23°C of at least 4 KJ/m²;
- tensile stress at yield: 15-30 MPa;
- elongation at break: higher than 40%, more preferably higher than 100%;
- substantially no whitening (blush) when bending a plaque 1 mm thick;
- fraction soluble in xylene at room temperature: less than 25%, more preferably less than 23% by weight.

The ductile/brittle transition temperature is generally equal to or lower than -25 °C, the lower limit being indicatively of about -60 °C.

The said C₄-C₁₀ α-olefins, that are or may be present as comonomers in the components and fractions of the compositions of the present invention, are represented by the formula CH₂=CHR, wherein R is an alkyl radical, linear or branched, with 2-8 carbon atoms or an aryl (in particular phenyl) radical.

Examples of said C₄-C₁₀ α-olefins are 1-butene, 1-pentene, 1-hexene, 4-methyl-1-pentene and 1-octene. Particularly preferred is 1-butene.

The compositions of the present invention can be prepared by a sequential polymerization, comprising at least three sequential steps, wherein components 1) and 2) are prepared in separate subsequent steps, operating in each step, except the first step, in the presence of the polymer formed and the catalyst used in the preceding step. The catalyst is added only in the first step, however its activity is such that it is still active for all the subsequent steps.

In particular, component 2) requires two sequential step, one for preparing copolymer (a) and the other for preparing copolymer (b).

Preferably component 1) is prepared before component 2).

The order in which copolymers (a) and (b), constituting component 2), are prepared is not critical.

The polymerization, which can be continuous or batch, is carried out following known techniques and operating in liquid phase, in the presence or not of inert diluent, or in gas phase, or by mixed liquid-gas techniques. Preferably component 1) is prepared in liquid phase, and component 2) is prepared in gas phase.

Reaction time, pressure and temperature relative to the two steps are not critical, however it is best if the temperature is from 20 to 100 °C. The pressure can be atmospheric or higher. The regulation of the molecular weight is carried out by using known regulators, hydrogen in particular.

Such polymerization is preferably carried out in the presence of stereospecific Ziegler-Natta catalysts. An essential component of said catalysts is a solid catalyst component comprising a titanium compound having at least one titanium-halogen bond, and an electron-donor compound, both supported on a magnesium halide in active form. Another essential component- (co-catalyst) is an organoaluminum compound, such as an aluminum alkyl compound.

An external donor is optionally added.

The catalysts generally used in the process of the invention are capable of producing polypropylene with an isotactic index greater than 90%, preferably greater than 95%. Catalysts having the above mentioned characteristics are well known in the patent literature; particularly advantageous are the catalysts described in US patent 4,399,054 and European patent 45977.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids. Particularly suitable electron-donor compounds are phthalic acid esters, such as diisobutyl, dioctyl, diphenyl and benzylbutyl phthalate.

Other electron-donors particularly suitable are 1,3-diethers of formula: 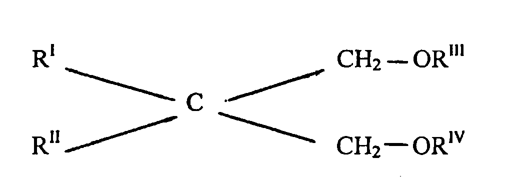 wherein R^{I} and R^{II} are the same or different and are C₁-C₁₈ alkyl, C₃-C₁₈ cycloalkyl or C₇-C₁₈ aryl radicals; R^{III} and R^{IV} are the same or different and are C₁-C₄ alkyl radicals; or are the 1,3-diethers in which the carbon atom in position 2 belongs to a cyclic or polycyclic structure made up of 5, 6 or 7 carbon atoms and containing two or three unsaturations.

Ethers of this type are described in published European patent applications 361493 and 728769.

Representative examples of said dieters are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

The preparation of the above mentioned catalyst components is carried out according to various methods.

For example, a MgCl₂. nROH adduct (in particular in the form of spheroidal particles) wherein n is generally from 1 to 3 and ROH is ethanol, butanol or isobutanol, is reacted with an excess of TiCl₄ containing the electron-donor compound. The reaction temperature is generally from 80 to 120 °C. The solid is then isolated and reacted once more with TiCl₄, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds which can be used for the preparation of the solid catalyst component are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or SO₄ or SO₃ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)₂ Si (OCH₃)₂, (cyclohexyl) (methyl) Si (OCH₃)₂, (phenyl)₂ Si (OCH₃)₂ and (cyclopentyl)₂ Si (OCH₃)₂. 1,3-diethers having the formulae described above can also be used advantageously. If the internal donor is one of these dieters, the external donors can be omitted.

The catalysts can be pre-contacted with small amounts of olefins (prepolymerization). Other catalysts that may be used in the process according to the present invention are metallocene-type catalysts, as described in USP 5,324,800 and EP-A-0 129 368; particularly advantageous are bridged bis-indenyl metallocenes, for instance as described in USP 5,145,819 and EP-A-0 485 823. Another class of suitable catalysts are the so-called constrained geometry catalysts, as described in EP-A-0 416 815 (Dow), EP-A-0 420 436 (Exxon), EP-A-0 671 404, EP-A-0 643 066 and WO 91/04257. These metallocene compounds may be used in particular to produce the copolymers (a) and (b).

The compositions of the present invention can also be obtained by preparing separately the said components 1) and 2) or even copolymers (a), (b) and component 1), by operating with the same catalysts and substantially under the same polymerization conditions as previously explained (except that a wholly sequential polymerization process will not be carried out, but the said components and fractions will be prepared in separate polymerization steps) and then mechanically blending said components and fractions in the molten or softened state. Conventional mixing apparatuses, like screw extrudres, in particular twin screw extruders, can be used.

The compositions of the present invention can also contain additives, commonly employed in the art, such as antioxidants, light stabilizers, heat stabilizers, nucleating agents, colorants and fillers.

In particular, the addition of nucleating agents brings about a considerable improvement in important physical-mechanical properties, such as Flexural Modulus, Heat Distortion Temperature (HDT), tensile strength at yield and transparency.

Typical examples of nucleating agents are the p-tert.-butyl benzoate and the 1,3- and 2,4-dibenzylidenesorbitols.

The nucleating agents are preferably added to the compositions of the present invention in quantities ranging from 0.05 to 2% by weight, more preferably from 0.1 to 1% by weight with respect to the total weight.

The addition of inorganic fillers, such as talc, calcium carbonate and mineral fibers, also brings about an improvement to some mechanical properties, such as Flexural Modulus and HDT. Talc can also have a nucleating effect.

The particulars are given in the following examples, which are given to illustrate, without limiting, the present invention.

### Examples 1-13

In the following examples polyolefin compositions according to the present invention and comparative compositions are prepared by sequential polymerization.

The solid catalyst component used in polymerization is a highly stereospecific Ziegler-Natta catalyst component supported on magnesium chloride, containing about 2.5% by weight of titanium and diisobutylphthalate as internal donor, prepared by analogy with the method described in Example 1 of European published patent application 395083.

### CATALYST SYSTEM AND PREPOLYMERIZATI0N TREATMENT

Before introducing it into the polymerization reactors, the solid catalyst component described above is contacted at 13 °C for 20 minutes with aluminum triethyl (TEAL) and dicyclopentyldimethoxysilane (DCPMS), in a TEAL/DCPMS weight ratio equal to about 3 and in such quantity that the TEAL/solid catalyst component weight ratio be equal to around 14.

The catalyst system is then subjected to prepolymerization by maintaining it in suspension in liquid propylene at 20 °C for about 5 minutes before introducing it into the first polymerization reactor.

### POLYMERIZATION

The polymerization runs are conducted in continuous in a series of four reactors equipped with devices to transfer the product from one reactor to the one immediately next to it. The first and second reactors are liquid phase reactors, and the third and fourth are gas phase reactors.

Hydrogen is used as molecular weight regulator.

The gas phase (propylene, ethylene, butene and hydrogen) is continuously analyzed via gas-chromatography.

At the end of the run the powder is discharged, stabilized following known techniques, and dried in an oven at 60 °C under a nitrogen flow.

Then the polymer particles are introduced in a rotating drum, where they are mixed with 0.01% by weight of Irgafos 168 tris (2,4-di-tert-butylphenyl) phosphite, 0.05% by weight of Irganox 1010 pentaerythrityl-tetrakis [3-(3,5-di-tert-butyl-4-hydroxy-phenyl)) propionate and 0.18% by weight of Millad 3988 3,4-dimethylbenzylidene sorbitol.

Then the polymer particles are introduced in a twin screw extruder Berstorff ZE 25 (length/diameter ratio of screws: 33) and extruded under nitrogen atmosphere in the following conditions:

| | |
|---|---|
| Rotation speed: | 250 rpm; |
| Extruder output: | 6-20 kg/hour; |
| Melt temperature: | 200-250 °C. |

The data relating to the final polymer compositions reported in the tables are obtained from measurements carried out on the so extruded polymers.

The data shown in the tables are obtained by using the following test methods.
- **Molar ratios of the feed gases**
   Determined by gas-chromatography.
- **Ethylene and 1-butene content of the polymers**
   Determined by I.R. spectroscopy.
- **Melt Flow Rate MFR**
   Determined according to ASTM D 1238, condition L.
- **Xylene soluble and insoluble fractions**
   Determined as follows.
   2.5 g of polymer and 250 cm³ of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25 °C for 30 minutes as well. The so formed solid is filtered on quick filtering paper. 100 cm³ of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene at room temperature is then calculated. The percent by weight of polymer insoluble in xylene at room temperature is considered the Isotacticity Index of the polymer. This value corresponds substantially to the Isotacticity Index determined by extraction with boiling n-heptane, which by definition constitutes the Isotacticity Index of polypropylene.
- **Intrinsic Viscosity (I.V.)**
   Determined in tetrahydronaphthalene at 135 °C.
- **Melting temperature (Tm)**
   Determined by DSC (Differential Scanning Calorimetry).
- **Flexural Modulus**
   Determined according to ISO 178.
- **Tensile stress at yield**
   Determined according to ISO R 527.
- **Elongation at yield**
   Determined according to ISO R 527.
- **Tensile stress at break**
   Determined according to ISO R 527.
- **Elongation at break**
   Determined according to ISO R 527.
- **Izod impact strength (notched)**
   Determined according to ISO 180/1A
- **DuctileBrittle transition temperature (DB)**
   Determined according to internal method MA 17324, available upon request. According to this method, the bi-axial impact resistance is determined through impact with an automatic, computerised striking hammer.

The circular test specimens are obtained by cutting with circular hand punch (38 mm diameter). They are conditioned for at least 12 hours at 23°C and 50 RH and then placed in a thermostatic bath at testing temperature for 1 hour.

The force-time curve is detected during impact of a striking hammer (5.3 kg, hemispheric punch with a ½" diameter) on a circular specimen resting on a ring support. The machine used is a CEAST 6758/000 type model no. 2. D/B transition temperature means the temperature at which 50% of the samples undergoes fragile break when submitted to the said impact test.

### Preparation of the plaque specimens

Plaques for D/B measurement, having dimensions of 127 x 127 x 1.5 mm are prepared according to internal method MA 17283; plaques for Haze measurement, 1 mm or 1.5 mm thick, are prepared by injection moulding according to internal method MA 17335 with injection time of 1 second, temperature of 230 °C, mould temperature of 40 °C, description of all the said methods being available upon request.

### Method MA 17283

The injection press is a Negri Bossi type (NB 90) with a clamping force of 90 tons. The mould is a rectangular plaque (127x127x1.5mm).

The main process parameters are reported below:

| | |
|---|---|
| Back pressure (bar): | 20 |
| Injection time (s): | 3 |
| Maximum Injection pressure (MPa): | 14 |
| Hydraulic injection pressure (MPa): | 6-3 |
| First holding hydraulic pressure (MPa): | 4±2 |
| First holding time (s): | 3 |
| Second holding hydraulic pressure (MPa): | 3±2 |
| Second holding time (s): | 7 |
| Cooling time (s): | 20 |
| Mould temperature (°C): | 60 |
| The melt temperature is between 220 and 280 °C. | |

### Method MA 17335

The injection press is a Battenfeld type BA 500CD with a clamping force of 50 tons. The insert mould leads to the moulding of two plaques (55x60x1 or 1.5 mm each).

### Haze on plaque

Determined according to internal method MA 17270, available upon request.

The plaques are conditioned for 12 to 48 hours at R.H. 50±5% and 23±1°C.

The apparatus used is a Hunter D25P-9 colorimeter. The measurement and computation principle are given in the norm ASTM-D1003.

The apparatus is calibrated without specimen, the calibration is checked with a haze standard. The haze measurement is carried out on five plaques.

**TABLE1**

| | | **Ex. 1*** | **Ex. 2*** | **Ex. 3*** |
|---|---|---|---|---|
| **1^{st} L.P.R,** | | | | |
| Temperature | °C | 70 | 70 | 70 |
| MFR "L" | g/10' | 26 | 23 | 29 |
| C2 content (polymer) | wt% | 1.4 | 1.3 | 1.3 |
| Xylene insoluble | wt% | 96.6 | 96.1 | 97.1 |

| **2^{nd} L.P.R.** | | | | |
|---|---|---|---|---|
| Temperature | °C | 70 | 70 | 70 |
| MFR"L" | g/10' | 29 | 25 | 25.2 |
| C2 content (total) | wt% | 1,4 | 1.3 | 1,2 |
| Xylene insoluble | wt% | 96.6 | 96.1 | 97.1 |

| **1^{st} G.P.R.** | | | | |
|---|---|---|---|---|
| Temperature | °C | 85 | 85 | 85 |
| Pressure | MPa; | 1.6 | 1.6 | 1.6 |
| H₂/C2- | mol | 0.13 | 0.2 | 0.16 |
| C2-/(C2-+C3-) | mol | 0.16 | 0.162 | 0.16 |
| MFR "L" | g/10' | 17.2 | 18.7 | 16.7 |
| C2 content (polymer) | wt% | 31 | 24.6 | 26.5 |
| Xylene soluble | wt% | 15.4 | 17.1 | 16.7 |
| Split | wt% | 12.5 | 13 | 14 |

| **2^{nd} G.P.R.** | | | | |
|---|---|---|---|---|
| Temperature | °C | 85 | 85 | 85 |
| Pressure | MPa | 1.9 | 1.9 | 1,9 |
| H_{2/}C2- | mol | 0.15 | 0.26 | 0.31 |
| C4-/(C4-+C2-) | mol | 0.35 | 0.35 | 0.35 |
| MFR "L" | g/10' | 11.6 | 10 | 13.2 |
| C2 content (polymer) | wt% | 85 | 85 | 85 |
| Split | wt% | 11,5 | 17 | 13 |
| *comparative example | | | | |

| **FINAL PRODUCT** | | | | |
|---|---|---|---|---|
| Xylene soluble | wt% | 15.4 | 17.6 | 17.1 |
| X.S.I.V. | d//g | 1.96 | 1.69 | 1.65 |
| MFR "L" | g/10' | 12 | 13 | 14 |
| C2 content (polymer) | wt% | 15.4 | 18.7 | 16 |
| C4 content (polymer) | wt% <2 | | 2.3 | <2 |
| Izod at 23 °C | KJ/m² | 14.4 | 13.1 | 8.3 |
| Flexural modulus | MPa | 880 | 900 | 1030 |
| D/B transition temperature | °C | -47 | -37 | -32 |
| Haze, 1.5 mm plaque | % | 89 | 65 | 65 |

**TABLE 2**

| | | **Ex. 4*** | **Ex. 5** | **Ex. 6** |
|---|---|---|---|---|
| **1^{st} L.P.R.** | | | | |
| Temperature | °C | 67 | 67 | 66 |
| MFR"L" | g/10' | 33 | 29 | 32 |
| C2 content (polymer) | wt% | 1.6 | 1.7 | 1.5 |
| Xylene insoluble | wt% | 96.5 | 96.2 | 95.7 |

| **2^{nd} L.P.R.** | | | | |
|---|---|---|---|---|
| Temperature | °C | 67 | 67 | 67 |
| MFR "L" | g/10' | 33 | 29 | 32.6 |
| C2 content (total) | wt% | 1.5 | 1.4 | 1.3 |
| Xylene insoluble | wt% | 96.5 | 96.2 | 96 |
| **1st G.P.R.** | | | | |
| Temperature | °C | 75 | 80 | 75 |
| Pressure | MPa | 1.6 | 1.6 | 1.6 |
| H₂/C2- | mol | 0.26 | 0.3 | 0.36 |
| C2-/(C2-+C3-) | mol | 0.16 | 0.165 | 0.16 |
| MFR "L" C2 content (polymer) | g/10' wt% | 18 27 | 19.1 29 | 22.7 28 |
| Xylene soluble | wt% | 18 | 16.8 | 17.4 |
| Split | wt% | 14 | 12 | 13 |

| **2^{nd} G.P.R-** | | | | |
|---|---|---|---|---|
| Temperature | °C | 80 | 80 | 80 |
| Pressure | MPa | 1.9 | *1.9* | 1.9 |
| H₂/C2- | mol | 0.35 | 0.34 | 0.32 |
| C4-/(C4-+C2-) | mol | 0.35 | 0.373 | 0.37 |
| MFR "L" | g/10' | 13.6 | 15.2 | 15.2 |
| C2 content (polymer) | wt% | 85 | 85 | 85 |
| Split | wt% | 20 | 18.6 | 19 |
| *comparative example | | | | |

| **FINAL PRODUCT** | | | | |
|---|---|---|---|---|
| Xylen soluble | wt% | 17.7 | 18.9 | 193 |
| X.S.I.V. | dl/g | 1.55 | 1.5 | 1.48 |
| MFR "L" | g/10' | 14 | *15* | 15 |
| C2 content (polymer) | wt% | 21.5 | 20.4 | 21.1 |
| C4 content (polymer) | wt% | <2 | 2.5 | 2.5 |
| Izod at 23 °C | KJ/m² | 27.6 | 29.1 | 27.9 |
| Flexural modulus | MPa | 820 | 845 | 810 |
| DB transition temperature | °C | -38 | -37 | -38 |
| Haze,1.5 mm plaque- | % | 50 | 47 | 47 |

**TABLE 3**

| | | **Ex. 7** | **Ex. 8** | **Ex. 9** |
|---|---|---|---|---|
| **1" L.P.R.** | | | | |
| **Temperature** | °C | 66 | 66 | 66 |
| MFR "L" | g/10' | 26 | 30 | 29.3 |
| C2 content (polymer) | wt% | 1.4 | 1.5 | 1.7 |
| Xylene insoluble | wt% | 95.7 | 96.3 | 96.3 |

| **2^{nd} L.P.R.** | | | | |
|---|---|---|---|---|
| Temperature | °C | 67 | 67 | 67 |
| MFR "L" | g/10' | 25.8 | 31 | 31.3 |
| C2 content (total) | wt% | 1.4 | 1.5 | 1.6 |
| Xylene insoluble | wt% | 96 | 96 | 96 |

| **1^{st} G.P.R.** | | | | |
|---|---|---|---|---|
| Temperature | °C | 75 | 75 | 75 |
| Pressure | MPa | 1.6 | 1.6 | 1.6 |
| H₂/C2- | mol | 0.375 | 0.364 | 0.38 |
| C2-/(C2-+C3-) | mol | 0.156 | 0.157 | 0.166 |
| MFR "L" | g/10' | 18.9 | 22.4 | 22 |
| C2 content (polymer) | wt% | 25.6 | 30 | 27.6 |
| Xylene soluble | wt% | 18.7 | 17.2 | 17.1 |
| Split | wt% | 14 | 13 | 13 |

| **2^{nd} G.P.R.** | | | | |
|---|---|---|---|---|
| Temperature | °C | 80 | 80 | 80 |
| Pressure | MPa | 1.9 | 1.9 | 1.9 |
| H₂/C2- | mol | 0.37 | 0.409 | 0.439 |
| C4-/(C4-+C2-) | mol | 0.366 | 0.371 | 0.364 |
| MFR "L" | g/10' | 12.7 | 17.5 | 17.7 |
| C2 content (polymer) | wt% | 85 | 85 | 85 |
| Split | wt% | 21 | 19 | 17.5 |
| **FINAL PRODUCT** | | | | |
| Xylene soluble | wt% | 20.7 | 19.2 | 20.3 |
| X.S.I.V. | dl/g | 1.35 | 1.22 | 1.39 |
| MFR "L" | g/10' | 14 | 17 | 19 |
| C2 content (polymer) | wt% | 22.6 | 20.9 | 19.4 |
| C4 content (polymer) | wt% | 2.8 | 2.7 | 2.3 |
| Izod at 23 °C | KJ/m² | 34.7 | 26.5 | 21.6 |
| Flexural modulus | MPa | 760 | 830 | 900 |
| D/B transition temperature | °C | -38 | -33 | -29 |
| Haze, 1.5 mm plaque | % | 45 | 45 | - |
| Haze, 1 mm plaque | % | - | 27 | 25 |

**TABLE 4**

| | | **Ex. 10** | **Ex. 11** | **Ex. 12** | **Ex.13** |
|---|---|---|---|---|---|
| **1^{st} L.P.R.** | | | | | |
| Temperature | °C | 65 | 65 | 65 | 65 |
| MFR "L" | g/10' | 28.9 | 32.5 | 31.4 | 65 |
| C2 content (polymer) | wt% | 1.6 | 1.4 | 1.6 | - |
| Xylene insoluble | wt% | 96.1 | 96.1 | 95.8 | 97.5 |

| **2^{nd} L.P.R.** | | | | | |
|---|---|---|---|---|---|
| Temperature | °C | 65 | 65 | 65 | 65 |
| MFR"L" | g/10' | 30.5 | 30.6 | 30 | 70 |
| C2 content (total) | wt% | 1.2 | 1.2 | 1.4 | - |
| Xylene insoluble | wt% | 96.4 | 96.4 | 95.9 | 97.5 |

| **1^{st} G.P.R.** | | | | | |
|---|---|---|---|---|---|
| Temperature | °C | 75 | 75 | 75 | 75 |
| Pressure | MPa | 1.6 | 1.6 | 1.6 | 1.6 |
| H₂/C2- | mol | 0.36 | 0.399 | 0.393 | 0.4 |
| C2-/(C2-+C3-) | mol | 0.163 | 0.158 | 0.206 | 0.161 |
| MFR "L" | g/10' | 22.1 | 24 | 21 | 49 |
| C2 content (polymer) | wt% | 28 | 27 | 31 | 28 |
| Xylene soluble | wt% | 17.6 | 17.5 | 18.1 | 15.5 |
| Split | wt% | 13 | 13 | 14 | 12 |

| **2^{nd} G.P.R.** | | | | | |
|---|---|---|---|---|---|
| Temperature | °C | 80 | 80 | 80 | 80 |
| Pressure | MPa | 1.9 | 1.9 | 1.9 | 1.9 |
| H₂/C2- | mol | 0.423 | 0.422 | 0.44 | 0.424 |
| C4-/(C4-+C2-) | mol | 0.373 | 0.366 | 0.375 | 0.37 |
| MFR "L" | g/10' | 18.1 | 19.8 | 21 | 30.6 |
| C2 content (polymer) | wt% | 85 | 85 | 85 | 85 |
| Split | wt% | 19.5 | 18 | 18 | 18.5 |

| **FINAL PRODUCT** | | | | | |
|---|---|---|---|---|---|
| Xylene soluble | wt% | 20.3 | 19.9 | 22.3 | 18.4 |
| X.S.I.V. | dl/g | 1.18 | 1.19 | 1.22 | 1.27 |
| MFR "L" | g/10' | 18 | 18 | 19 | 29 |
| C2 content (polymer) | wt% | 21.2 | 19.8 | 22.8 | 19.2 |
| C4 content (polymer) | wt% | 3.2 | 3.2 | 2.9 | 3.2 |
| Izod at 23 °C | KJ/m² | 25 | 30 | 34 | 6.9 |
| Flexural modulus | MPa | 880 | 850 | 840 | 1040 |
| Tensile stress at yield | MPa | 21 | 20 | 19 | 23.5 |
| Elongation at yield | % | 17 | 18 | 18 | 14 |
| Tensile stress at break | MPa | 17.6 | 17 | 19.5 | 16 |
| Elongation at break | % | 380 | 355 | 440 | 120 |
| D/B transition temperature | °C | -33 | -35 | -39 | -35 |
| Haze, 1mm plaque | % | 22.5 | 26 | 28.7 | 29.3 |
| Melting temperature | °C | 155.9 | 156.6 | 157 | 164 |

| | | | | | |
|---|---|---|---|---|---|
| Notes to the tables. L.P.R. = Liquid Phase Reactor; Split = weight fraction of polymer produced in the specified reactor; G.P.R. = Gas Phase Reactor; C2 = ethylene; C4 = butene; H₂/C2- = molar ratio of fed hydrogen to fed ethylene; C2-/(C2-+C3-) = molar ratio of fed ethylene to fed ethylene plus fed propylene; C4-/(C4-+C2-) = molar ratio of fed butene to fed butene plus fed ethylene; X.S. I.V. = Intrinsic Viscosity of Xylene Soluble fraction. | | | | | |

## Claims

1. Polyolefin compositions comprising (percent by weight):
1) 55%-90% of a crystalline propylene homopolymer or copolymer containing up to 15% of ethylene and/or C₄-C₁₀ α-olefin(s);
2) 10%-45% of a blend of a copolymer of propylene with more than 15% up to 40% of ethylene (copolymer (a)), and a copolymer of ethylene with one or more C₄-C₁₀ α-olefin(s) containing from 10% to 40% of said C₄-C₁₀ α-wherein the intrinsic viscosity [η] of the fraction of the everall composition soluble in xylene at room temperature is from 0.8 to 1.5 dl/g olefin(s) (copolymer (b)), wherein the weight ratio (a)/(b) is from 1/4 to 4/1

2. The polyolefin compositions of claim 1, having Melt Flow rate values (230 °C, 2.16 Kg) equal to or higher than 4 g/10 min.

3. The polyolefin compositions of claim 1, wherein the content of polymer soluble in xylene at room temperature is less than 25%.

4. The polyolefin compositions of claim 1, having a Ductile/Brittle transition temperature equal to or lower than -25 °C.

5. A process for producing the polyolefin compositions of claim 1, carried out in at least three sequential steps, wherein in at least one polymerization step the relevant monomer(s) are polymerized to form component 1) and in the other two steps the relevant monomers are polymerized to form copolymers (a) and (b), operating in each step, except the first step, in the presence of the polymer formed and the catalyst used in the preceding step.

6. The process of claim 5. wherein the polymerization catalyst is a stereospecific Ziegler-Natta catalyst comprising, as catalyst-forming components, a solid component comprising a titanium compound having at least one titanium-halogen bond and an electron-donor compound, both supported on a magnesium halide in active form, and an organoaluminum compound.

7. The process of claim 5, wherein component 1) is prepared in liquid phase, and component 2) is prepared in gas phase.

8. Injection moulded articles comprising the polyolefin compositions of claim 1.

## Patentansprüche

1. Polyolefinzusammensetzungen, umfassend (in Gew.-%):
1) 55 % bis 90 % eines kristallinen Propylen-Homopolymers oder -Copolymers mit bis zu 15 % Ethylen und/oder C₄- bis C₁₀-α-Olefin(en);
2) 10 % bis 45 % einer Mischung aus einem Propylen-Copolymer mit mehr als 15 % bis zu 40 % Ethylen (Copolymer (a)), und einem Ethylen-Copolymer mit einem oder mehr C₄- bis C₁₀-α-Olefin(en) mit von 10 % bis 40 % des/der C₄- bis C₁₀-α-Olefins/Olefine (Copolymer (b)), worin das Gewichtsverhältnis (a):(b) von 1:4 bis 4:1 beträgt;
wobei die intrinsische Viskosität (η) der in Xylen löslichen Fraktion der Gesamtzusammensetzung bei Raumtemperatur von 0,8 bis 1,5 dl/g beträgt.

2. Polyolefinzusammensetzungen nach Anspruch 1 mit Schmelzflussratenwerten (bei 230 °C, 2,16 kg), die gleich oder höher als 4 g/10 min sind.

3. Polyolefinzusammensetzungen nach Anspruch 1, worin der in Xylen lösliche Polymergehalt bei Raumtemperatur weniger als 25 % beträgt.

4. Polyolefinzusammensetzungen nach Anspruch 1 mit einer duktil-spröden Übergangstemperatur, die gleich oder niedriger als -25 °C ist.

5. Verfahren zur Herstellung der Polyolefinzusammensetzungen nach Anspruch 1, das in mindestens drei sequenziellen Schritten durchgeführt wird, wobei in mindestens einem Polymerisationsschritt das/die relevante(n) Monomer(e) zur Bildung von Komponente 1) polymerisiert wird/werden und in den beiden anderen Schritten die relevanten Monomere zur Bildung von Copolymeren (a) und (b) polymerisiert werden, die in jedem Schritt, außer dem ersten Schritt, in Gegenwart des gebildeten Polymers und des im vorangehenden Schritt verwendeten Katalysators betrieben werden.

6. Verfahren nach Anspruch 5, worin der Polymerisationskatalysator ein stereospezifischer Ziegler-Natta-Katalysator ist, umfassend, als katalysatorbildende Komponenten, eine feste Komponente, die aus einer Titanverbindung mit mindestens einer Titan-Halogen-Bindung und einer Elektronendonator-Verbindung, die beide auf einem Magnesiumhalogenid in aktiver Form geträgert sind, und einer Organoaluminiumverbindung besteht.

7. Verfahren nach Anspruch 5, worin Komponente 1) in der flüssigen Phase hergestellt wird und Komponente 2) in der Gasphase hergestellt wird.

8. Spritzgießteile, die aus den Polyolefinzuammensetzungen nach Anspruch 1 bestehen.

## Revendications

1. Compositions polyoléfiniques comprenant (en pourcentage en poids) :
1) 55-90% d'un homopolymère ou d'un copolymère cristallin de propylène contenant jusqu'à 15% d'éthylène et/ou d'α-oléfine(s) en C₄-C₁₀;
2) 10%-45% d'un mélange d'un copolymère de propylène comprenant plus de 15% jusqu'à 40% d'éthylène (copolymère (a)), et d'un copolymère d'éthylène comprenant une ou plusieurs α-oléfine(s) en C₄-C₁₀ contenant de 10% à 40% de ladite/desdites α-oléfine(s) en C₄-C₁₀ (copolymère (b)), où le rapport pondéral (a)/(b) est de 1/4 à 4/1 ;
où la viscosité intrinsèque [η] de la fraction de la composition totale soluble dans le xylène à température ambiante est de 0,8 à 1,5 dl/g.

2. Compositions polyoléfiniques selon la revendication 1, présentant des valeurs d'indice de fluidité à chaud (230°C, 2,16 kg) égales ou supérieures à 4 g/10 min.

3. Compositions polyoléfiniques selon la revendication 1, où la teneur en polymère soluble dans le xylène à température ambiante est inférieure à 25%.

4. Compositions polyoléfiniques selon la revendication 1, présentant une température de transition ductile/cassant égale ou inférieure à -25°C.

5. Procédé pour la production des compositions polyoléfiniques selon la revendication 1, réalisé en au moins étapes séquentielles, où dans au moins une étape de polymérisation le/les monomère(s) pertinent(s) est/sont polymérisé(s) pour former le composant 1) et dans les deux autres étapes les monomères pertinents sont polymérisés pour former les copolymères (a) et (b), en opérant dans chaque étape, à l'exception de la première étape, en présence du polymère formé et du catalyseur utilisé dans l'étape précédente.

6. Procédé selon la revendication 5, où le catalyseur de polymérisation est un catalyseur de Ziegler-Natta stéréospécifique comprenant, comme composants formant le catalyseur, un composant solide comprenant un composé de titane présentant au moins une liaison titane-halogène et un composé donneur d'électrons, tous deux supportés sur un halogénure de magnésium sous forme active, et un composé organique d'aluminium.

7. Procédé selon la revendication 5, où le composant 1) est préparé en phase liquide, et le composant 2) est préparé en phase gazeuse.

8. Objets moulés par injection comprenant les compositions polyoléfiniques selon la revendication 1.
